# EUROPEAN PATENT APPLICATION

(11) **EP 1 603 358 A1**
(43) Date of publication of application: **07.12.2005**
(21) Application number: 04013276.3
(22) Date of filing: 04.06.2004
(51) Int. Cl.: H04Q 7/38

(54) **Radio communication equipment and method of controlling said radio communication equipment**

(71) Applicant: Sony Ericsson Mobile Communications AB, 221 88 Lund (SE)
(72) Inventor: Nelson, Joakim, 222 70 Lund (SE)
(74) Representative: Körber, Martin Hans

(57) **Abstract**

Radio communication equipment 1 comprising a first communication unit 2 for wireless communication with one or plural radio communication units 11, 12, 13 via at least one speech channel by contacting a respective address of each radio communication unit 11, 12, 13 a second communication unit 3 for wireless communication with one radio communication unit 11, 12, 13 or a predefined group of radio communication units 11, 12, 13 via at least one data channel by contacting a respective address of each radio communication unit 11, 12, 13 a user interface 4 for controlling said first and second communication units and an address organiser 5 for organising the addresses of the radio communication units 11, 12, 13, wherein the address organiser 5 is further adapted to automatically identify the addresses of all radio communication units 11, 12, 13 currently contacted by said first communication unit 2 and to automatically define a meeting group consisting of the respective addresses of all radio communication units 11, 12, 13 currently contacted by said first communication unit 2, wherein said user interface 4 is adapted to control said second communication unit 3 to automatically establish wireless communication with all radio communication units 11, 12, 13 of said meeting group.

## Description

### TECHNICAL FIELD OF THE INVENTION

The present invention relates to a radio communication equipment and a method of controlling said radio communication equipment comprising the features of the preambles of independent claims 1 and 7, respectively.

In the technical field of radio communication equipments such as mobile telephones, pagers, communicators, electronic organisers, smartphones or the like, possibilities for wireless communication have been increased.

Said radio communication equipments usually are adapted to communicate via at least one speech channel for transmission and reception of a speech signal with one or plural further radio communication units.

Furthermore, said radio communication equipments usually are adapted to communicate via at least one data channel with one or plural further radio communication units to transmit and receive a data signal. Said data signal may comprise text, music or picture information, for example.

There are two general approaches for wireless communication:

A first approach establishes a first wireless connection between a radio communication equipment with a terminal of a provider for wireless communication and a second wireless connection between said terminal of said provider and one or plural further radio communication units.

A second approach establishes a direct wireless connection between two or plural radio communication equipments.

During the last years the ability of radio communication equipments to simultaneously communicate with plural further radio communication units has been increased. A communication of one radio communication equipment with plural radio communication units at the same time frequently is called "conference call" or "meeting call". Said conference calls / meeting calls usually are initiated by one radio communication equipment who calls and invites further radio communication units.

Moreover, the ability of modern radio communication equipments to send a data signal to plural radio communication units at the same time or automatically one after another has been increased.

### DESCRIPTION OF RELATED ART

A modern radio communication equipment is adapted to establish a conference call with up to five parties. Said parties are called one after another by the radio communication equipment and then invited to join the conference call / meeting call. Physically said "invitation" frequently is performed by transmitting a corresponding signal to a provider of wireless communication.

During the conference call / meeting call the main menu of the radio communication equipment typically can be entered and data information e.g. a SMS (short message service) or a MMS (multimedia messaging service) or an e-mail can be prepared by using a suitable keypad.

Said SMS, MMS or e-mail can be sent during the conference call / meeting call via a suitable data channel of the radio communication equipment to an arbitrary radio communication unit or to a predefined group of radio communication units. Said radio communication units might be participants of the actual conference call, too.

In case said data information is sent to a group of radio communication units, the radio communication units belonging to said group usually are contacted automatically and sequentially via said data channel of the radio communication equipment.

Alternatively, plural radio communication units might be chosen manually by using an address book included in the radio communication equipment, for example.

Afterwards said radio communication units usually are contacted sequentially via said data channel of the radio communication equipment.

Furthermore, the reception of data information like SMS or MMS during a call is possible. The SMS or MMS might contain text, picture and / or sound information and can be opened and read during the call. By using an "answer" function a reply to the respective sender of the SMS or MMS automatically can be sent by the radio communication equipment.

Summarising, modern radio communication equipments/units according to the prior art are adapted for wireless communication via a speech channel and a data channel to a plurality of persons at the same time.

It is important to emphasise that the groups available in known radio communication equipments have to be predefined. Frequently, groups for e.g. family, VIP, office, friends etc. are provided. Furthermore, it is emphasised that sending of data information has to be performed manually when using the radio communication equipment according to the prior art.

During conference / meeting calls there is often a need of providing all parties involved in said conference call / meeting call with a data information (e.g. a text, picture or sound information).

With the above-described radio communication equipment according to the prior art it is a disadvantage that all recipients of the data information have to be chosen manually by the user of the radio communication equipment.

During a conference call the input of said recipients usually is very complicated since a plurality of sub-menus have to be opened. The recipients either have to be chosen one after the other from an internal address book of the radio communication equipment or the corresponding phone number has to be input manually.

In consequence, the user of the radio communication equipment who wants to send data information usually cannot remain concentrated on the conference call / meeting call.

Therefore, the ability of modern radio communication equipments to send and receive voice information and data information via a speech channel and a data channel at the same time usually is not used during conference calls / meeting calls.

### OBJECT OF THE PRESENT INVENTION

It is the object of the present invention to overcome the above cited disadvantages of the prior art and to provide a radio communication equipment that allows establishment of a data channel to radio communication units that are currently connected via a speech channel with said radio communication equipment in an easy and comfortable way.

It is a further object of the present invention to provide a method of controlling said radio communication equipment in an easy and reliable way.

### DESCRIPTION OF THE INVENTION

The above described object is solved in a radio communication equipment comprising the features of the preamble of independent claim 1 by the features of the characterising part of claim 1.

Furthermore, the above described object is solved with a method for controlling a radio communication equipment comprising the features of the preamble of independent claim 7 by the features of the characterising part of claim 7.

Further developments are set forth in the dependent claims.

According to the present invention a radio communication equipment comprises a first communication unit for wireless communication with one or plural radio communication units via at least one speech channel by contacting a respective address of each radio communication unit, a second communication unit for wireless communication with one radio communication unit or a predefined group of radio communication units via at least one data channel by contacting a respective address of each radio communication unit, a user interface for controlling said first and second communication units and an address organiser for organising the addresses of the radio communication units, wherein the address organiser is further adapted to automatically identify the addresses of all radio communication units currently contacted by said first communication unit and to automatically define a meeting group consisting of the respective addresses of all radio communication units currently contacted by said first communication unit, wherein said user interface is adapted to control said second communication unit to automatically establish wireless communication with all radio communication units of said meeting group defined by said address organiser.

Thus the address organiser according to the present invention is adapted to both automatically identify the addresses of all radio communication units currently contacted by said radio communication equipment via at least one speech channel and to automatically define a meeting group consisting of the respective addresses of said radio communication units. Therefore, there is no need for a user of the inventive radio communication equipment who wants to spread data information to all participants of a conference call / meeting call to manually input the respective addresses of the radio communication units of said participants.

Since the user interface of the inventive radio communication equipment is adapted to control said second communication unit to automatically establish wireless communication with all radio communication units of said meeting group by automatically contacting the respective addresses comprised in the meeting group, a user can send either manually or automatically data information via a data channel to all radio communication units called during a conference call / meeting call.

The radio communication units receiving said data information can reply to said data information with ease by simply using the "answer" function of the respective radio communication unit without entering the address of the sending radio communication equipment.

Thus, all parties of a conference call / meeting call can stay focused on the meeting issues.

The additional data channel provides an extra channel for interaction between the parties involved in the conference call / meeting call.

The inventive radio communication equipment establishes a new data channel to radio communication units currently connected via a speech channel with said radio communication equipment in a very easy and comfortable way. Therefore, the simultaneous usage of the speech channel and the voice channel of a radio communication equipment will be increased. This will result in a further profit for providers of mobile communication.

Preferably, said address organiser dynamically updates said meeting group.

Thus, it is guaranteed that the correct radio communication units automatically are contacted by the second communication unit of the inventive radio communication equipment.

It is preferred that said addresses of said radio communication units are phone numbers and/or e-mail addresses.

Therefore, the most convenient kinds of addresses for wireless communication can be used.

According to a first preferred embodiment said second communication unit is adapted to use an infrared and/or Bluetooth interface for wireless communication.

Thus, in environments where the involved parties of a conference call / meeting call are very close to each other direct wireless communication via at least one data channel is possible without involving an operator of wireless communication network.

According to a second preferred embodiment said second communication unit is adapted to use a data channel provided for a SMS short message service and/or a MMS multimedia messaging service for wireless communication.

Said data channels are broadly provided by providers of wireless communication networks.

Favourably said user interface is adapted to control said second communication unit to automatically establish wireless communication with all radio communication units of said meeting group based on a corresponding input of a user and/or automatically as soon as a meeting group is defined by the address organiser.

Since on the one hand the user interface controls said second communication unit to automatically establish wireless communication with all radio communication units of said meeting group based on a corresponding input of a user the control of establishing wireless communication via at least one data channel and thus control of the costs remains by the respective user of the radio communication equipment.

On the other hand, in case said second communication unit automatically establishes a wireless communication with all radio communication units of said meeting group as soon as the meeting group is defined by the address organiser, the new channel to the parties involved in the conference call / meeting call can be established without user interaction.

According to the present invention a method of controlling a radio communication equipment comprising the steps of
- (S1) establishing a first wireless communication with plural radio communication units via at least one speech channel by contacting a respective address of each radio communication unit;
- (S2) automatically identifying the addresses of all radio communication units currently contacted via said at least one speech channel;
- (S3) automatically defining a meeting group consisting of the respective addresses of all radio communication units currently contacted via said at least one speech channel; and
- (S4) establishing a second wireless communication with all radio communication units of said meeting group via at least one data channel by automatically contacting the respective addresses of the radio communication units contained in said meeting group.

According to a preferred embodiment the method further comprises the step of
- (S5) dynamically updating said meeting group.

Favourably said addresses of said radio communication units are phone numbers and/or e-mail addresses.

According to a first preferred embodiment said wireless communication via said at least one data channel is performed via an infrared and/or Bluetooth interface.

According to a second preferred embodiment said wireless communication via said at least one data channel is performed via a SMS short message service and/or a MMS multimedia messaging service.

Favourably the step of (S4) establishing a wireless communication with all radio communication units of said meeting group via said at least one data channel is performed in response to a user input.

It is beneficial if the step of (S4) establishing a wireless communication with all radio communication units of said meeting group via said at least one data channel automatically is performed after the step of defining a meeting group.

Furthermore, the above object is solved by a computer program product directly loadable into the internal memory of a radio communication equipment, comprising software code portions for performing the steps of claims 7 to 13 when said product is run on a microprocessor of said radio communication equipment.

Thus, the inventive method may be implemented in a modern radio communication equipment with e.g. Java functionality with ease.

### BRIEF DESCRIPTION OF THE DRAWINGS

In the following detailed description, the present invention is further explained by reference to the accompanying drawings, in which like reference characters refer to like parts throughout the views, wherein:
- Fig. 1: shows a block diagram of a radio communication equipment according to the present invention; and
- Fig. 2: shows the function of the inventive method for controlling the radio communication equipment of Fig. 1 based on a schematic diagram.

### DETAILED DESCRIPTION OF EMBODIMENT

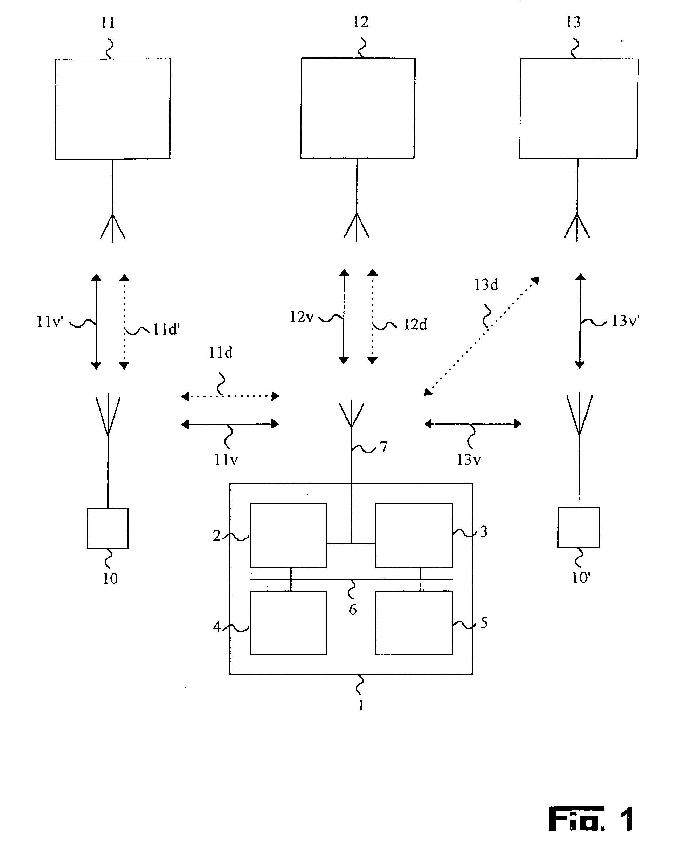

In a preferred embodiment shown in Fig. 1 the radio communication equipment is a mobile phone and thus a portable radio communication equipment. Alternatively, the radio communication equipment may be a pager, communicator, electronic organiser, smartphone or the like.

It is emphasised that the Figures only show elements that are necessary for the present invention. A plurality of additional elements (e.g. microprocessors, batteries, storage means etc.) might be provided in the inventive radio communication equipment.

The mobile phone 1 comprises a first communication unit 2 for wireless communication via a speech channel and a second communication unit 3 for wireless communication via a data channel. The first communication unit 2 and the second communication unit 3 are connected to an antenna 7 of the inventive mobile phone 1.

Furthermore, a user interface 4 and an address organiser 5 are provided. The first communication unit 2, the second communication unit 3, the user interface 4 and the address organiser 5 are interconnected by a central communication bus 6 of the inventive mobile phone 1.

The first communication unit 2 and the second communication unit 3 are adapted for wireless communication via said antenna 7 with external radio communication units.

In Fig. 1, a first external radio communication unit 11 is a second mobile phone, a second external radio communication unit 12 is a smartphone and a third external radio communication unit 13 is a communicator.

Wireless communication with said first, second and third radio communication units 11, 12 and 13 is performed by said first communication unit 2 via respective speech channels 11V, 12V and 13V by contacting a respective address of each radio communication unit 11, 12, 13.

The speech channels 11V, 12V and 13V are adapted for bi-directional transmission of a voice signal.

In the present embodiment, the addresses of the second mobile phone 11, the smartphone 12 and the communicator 13 are phone numbers.

As it is shown in Fig. 1 wireless communication between the first communication unit 2 of the inventive mobile phone 1 and both the second mobile phone 11 and the communicator 13 is not performed directly but via a terminal 10, 10' of a provider of a wireless communication network.

Thus, first speech channels 11V and 13V are established between the inventive mobile phone 1 and the respective terminal 10, 10'. Second speech channels 11V' and 13V' are established between the respective terminal 10, 10' and the second mobile phone 11 and the communicator 13, respectively:

In the present embodiment the speech channel 11V corresponds with the GSM standard and the speech channel 13V corresponds with the UMTS standard.

The speech channel 12V between the inventive mobile phone 1 and the smartphone 12 is provided directly. In this example, said speech channel 12V corresponds with the DECT standard.

The second communication unit 3 is adapted for wireless communication with said second mobile phone 11, said smartphone 12 and said communicator 13 via at least one data channel 11D, 12D and 13D.

As it is shown in Fig. 1 the wireless communication between the second communication unit 2 of the inventive mobile phone 1 and the second mobile phone 11 is not performed directly but via a terminal 10 of a provider of a wireless communication network.

Thus, a first data channel 11D is established between the inventive mobile phone 1 and the terminal 10. A second data channel 11D' is established between the terminal 10 and the second mobile phone 11.

The data channel 11D used by the second communication unit 3 for wireless communication with said second mobile phone 11 corresponds with the short message service SMS. Alternatively, an alternative data channel supported by the respective provider of the wireless communication network (e.g. the multimedia messaging service MMS) might be used by the second communication unit 3 of the inventive mobile phone 1.

The data channels 12D and 13D between the inventive mobile phone 1 and the smartphone 12 and the communicator 13 are provided directly. In the present embodiment, said second communication unit 3 uses an infrared interface for providing said data channel 12D and a Bluetooth interface for providing said data channel 13D. Alternatively, a radio link might be used, for example.

To establish a respective connection between the second communication unit 3 of the inventive mobile phone 1 and the second mobile phone 11, the smartphone 12 and/or the communicator 13 the second communication unit 3 uses a respective address of the second mobile phone 11, the smartphone 12 and the communicator 13. Said address might be a phone number, an e-mail address or an IP address, for example.

The user interface 4 is adapted to control the first and second communication units 2 and 3.

In the present embodiment, said user interface 4 comprises a microphone to input speech information for transmission by said first communication unit 2, a loudspeaker to emit speech information received by said first communication unit 2, a keypad to input text information into the mobile phone 1 and to transmit the text information to said second communication unit 3 for transmission, a display to display text information received by said second communication unit 3 and an external connector for attaching an external information source. Furthermore, by using the keypad of the user interface 4 a user is adapted to control the first and second communication units 2, 3, respectively.

According to the present invention, the address organiser 5 automatically identifies the corresponding addresses of the second mobile phone 11, the smartphone 12 and the communicator 13 currently contacted by the first communication unit 2 of the inventive mobile phone 2 via a speech channel 11V, 12V, 13V.

Furthermore, the address organiser 5 automatically defines a meeting group consisting of the respective addresses of the second mobile phone 11, the smartphone 12 and the communicator 13 currently contacted by said first communication unit 2 of the inventive mobile phone 1.

Therefore, there is no need for a user of the inventive mobile phone 1 who wants to spread data information to all participants of a conference call / meeting call to manually input the respective addresses of the second mobile phone 11, the smartphone 12 or the communicator 13 of said participants.

In the present embodiment the user interface 4 of the inventive mobile phone 1 controls said second communication unit to automatically establish wireless communication with the second mobile phone 11, the smartphone 12 and the communicator 13 of said meeting group defined by said address organiser 5 based on a corresponding input of a user via the keypad. Thus, the control of establishing wireless communication via at least one data channel and thus control of the costs remains by the respective user of the inventive mobile phone 1.

According to an alternative preferred embodiment the user interface is adapted to control the second communication unit to automatically establish wireless communication with all radio communication units of said meeting group automatically as soon as the meeting group is defined by the address organiser. Therefore, the new data channel to the parties involved in the conference call /meeting call can be established without user interaction.

Since the user interface 4 of the inventive radio communication equipment is adapted to control said second communication unit 3 to automatically establish wireless communication with all radio communication units of said meeting group by automatically contacting the respective addresses comprised in the meeting group, a user of the inventive mobile phone 1 can send either manually or automatically data information via a data channel 11D, 12D, 13D to all radio communication units 11, 12, 13 called during a conference call / meeting call.

A user of the second mobile phone 11, the smartphone 12 or the communicator 13 receiving said data information can reply to said data information with ease by simply using the "answer" function of the respective radio communication unit 11, 12, 13 without entering the address of the sending inventive mobile phone 1.

Thus, all parties of a conference call / meeting call can stay focused on the meeting issues.

The additional data channel provides an extra channel for interaction between the parties involved in the conference call / meeting call.

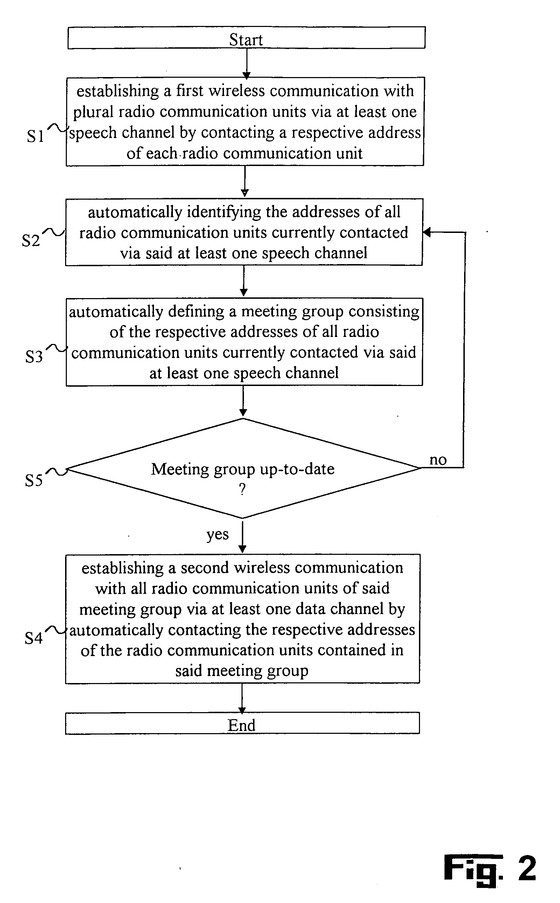

In the following, the function of the inventive method for controlling a radio communication equipment 1 is further explained by reference to Figs. 1 and 2.

In a first step S1 a first wireless communication with plural radio communication units 11, 12, 13 is established via at least one speech channel 11V, 12V, 13V by contacting a respective address of each radio communication unit 11, 12, 13.

In the following step S2 the addresses of all radio communication units 11, 12, 13 currently contacted via said at least one speech channel 11V, 12V, 13V automatically are identified.

Afterwards, in step S3 a meeting group consisting of the respective addresses of all radio communication units 11, 12, 13 contacted via said at least one speech channel 11V, 12V, 13V automatically is defined.

In the following step S5 it is decided whether said meeting group is still up to date. If this is not the case, the method loops to step S2.

If the meeting group is up to date, in step S4 a second wireless communication with all radio communication units 11, 12, 13 of said meeting group is established via at least one data channel 11D, 12D, 13D by automatically contacting the respective addresses of the radio communication units 11, 12, 13 contained in said meeting group.

Said step S4 of establishing a wireless communication with all radio communication units 11, 12, 13 of said meeting group via at least one data channel 11D, 12D, 13D is either performed in response to a user input or automatically as soon as the step S3 of defining a meeting group is completed.

Afterwards, the inventive method is terminated.

According to an alternative embodiment that is not shown in the figures, the method is not terminated after method step S4 but loops to step S2 to update the meeting group.

In the present embodiment, said addresses of said radio communication units 11, 12, 13 are phone numbers. Alternatively, e.g. an IP address or an e-mail address may be used.

According to this embodiment of the inventive method, wireless communication via said at least one data channel 11D, 12D, 13D is performed via a multimedia messaging service MMS of a provider of a wireless communication network. Alternatively, a channel provided for the short message service SMS might be used, for example. Further alternatively, even direct wireless communication via an infrared or Bluetooth interface might be performed.

Furthermore, the above object is solved by a computer program product directly loadable into the internal memory of a radio communication equipment, comprising software code portions for performing the steps of claims 7 to 13 when said product is run on a microprocessor of said radio communication equipment.

Thus, the inventive method may be implemented in a modern radio communication equipment with e.g. Java functionality with ease.

Furthermore, the terms "radio communication equipment" and "radio communication unit" have been used simultaneously. It has to be emphasised that both terms might be used to define apparatuses having an identical or a different structure.

It should be emphasised that the term "comprises/comprising" when used in this specification is taken to specify the presence of the features, integers, steps or components but does not preclude the presence or addition of one or more other features, integers, steps, components or groups thereof.

Summarising, the inventive radio communication equipment and method for controlling said radio communication equipment establishes a new data channel to radio communication units currently connected via a speech channel with said radio communication equipment in a very easy and comfortable way. Therefore, the simultaneous usage of the speech channel and the voice channel of a radio communication equipment will be increased. This will result in a further profit for providers of mobile communication.

## Claims

1. Radio communication equipment (1) comprising
a first communication unit (2) for wireless communication with one or plural radio communication units (11, 12, 13) via at least one speech channel by contacting a respective address of each radio communication unit (11, 12, 13);
a second communication unit (3) for wireless communication with one radio communication unit (11, 12, 13) or a predefined group of radio communication units (11, 12, 13) via at least one data channel by contacting a respective address of each radio communication unit (11, 12, 13);
a user interface (4) for controlling said first and second communication units; and
an address organiser (5) for organising the addresses of the radio communication units (11, 12, 13),
**characterised in that**
the address organiser (5) is further adapted to
automatically identify the addresses of all radio communication units (11, 12, 13) currently contacted by said first communication unit (2) and to
automatically define a meeting group consisting of the respective addresses of all radio communication units (11, 12, 13) currently contacted by said first communication unit (2),
wherein said user interface (4) is adapted to control said second communication unit (3) to automatically establish wireless communication with all radio communication units (11, 12, 13) of said meeting group defined by said address organiser (5).

2. Radio communication equipment (1) according to claim 1,
**characterised in that**
said address organiser (5) dynamically updates said meeting group.

3. Radio communication equipment (1) according to claim 1 or 2,
**characterised in that**
said addresses of said radio communication units (11, 12, 13) are phone numbers and/or e-mail addresses.

4. Radio communication equipment (1) according to one of the claims 1, 2 or 3,
**characterised in that**
said second communication unit (3) is adapted to use an infrared and/or bluetooth interface for wireless communication.

5. Radio communication equipment (1) according to one of the proceeding claims,
**characterised in that**
said second communication unit (3) is adapted to use a data channel provided for a SMS short message service and/or a MMS multimedia messaging service for wireless communication.

6. Radio communication equipment (1) according to one of the proceeding claims,
**characterised in that**
said user interface (4) is adapted to control said second communication unit (3) to automatically establish wireless communication with all radio communication units (11, 12, 13) of said meeting group based on a corresponding input of a user and/or automatically as soon as a meeting group is defined by the address organiser.

7. Method of controlling a radio communication equipment (1) comprising the steps of
- (S1) establishing a first wireless communication with plural radio communication units (11, 12, 13) via at least one speech channel by contacting a respective address of each radio communication unit (11, 12, 13);
- (S2) automatically identifying the addresses of all radio communication units (11, 12, 13) currently contacted via said at least one speech channel;
- (S3) automatically defining a meeting group consisting of the respective addresses of all radio communication units (11, 12, 13) currently contacted via said at least one speech channel; and
- (S4) establishing a second wireless communication with all radio communication units (11, 12, 13) of said meeting group via at least one data channel by automatically contacting the respective addresses of the radio communication units (11, 12, 13) contained in said meeting group.

8. Method of controlling a radio communication equipment (1) according to claim 7,
**characterised in that** the method further comprises the step of
- (S5) dynamically updating said meeting group.

9. Method of controlling a radio communication equipment (1) according to claim 7 or 8,
**characterised in that**
said addresses of said radio communication units (11, 12, 13) are phone numbers and/or e-mail addresses.

10. Method of controlling a radio communication equipment (1) according to claim 7, 8 or 9,
**characterised in that**
said wireless communication via said at least one data channel is performed via an infrared and/or bluetooth interface.

11. Method of controlling a radio communication equipment (1) according to one of the claims 7 to 10,
**characterised in that**
said wireless communication via said at least one data channel is performed via a SMS short message service and/or a MMS multimedia messaging service.

12. Method of controlling a radio communication equipment (1) according to one of the claims 7 to 11,
**characterised in that**
the step of (S4) establishing a wireless communication with all radio communication units (11, 12, 13) of said meeting group via said at least one data channel is performed in response to a user input.

13. Method of controlling a radio communication equipment (1) according to one of the claims 7 to 12,
**characterised in that**
the step of (S4) establishing a wireless communication with all radio communication units (11, 12, 13) of said meeting group via said at least one data channel automatically is performed after the step of defining a meeting group.

14. A computer program product directly loadable into the internal memory of a radio communication equipment, comprising software code portions for performing the steps of claims 7 to 13 when said product is run on a microprocessor of said radio communication equipment.
